# EUROPEAN PATENT SPECIFICATION

(11) **EP 4 015 844 B1**
(45) Date of publication and mention of the grant of the patent: **25.02.2026**
(21) Application number: 21214684.9
(22) Date of filing: 15.12.2021
(51) Int. Cl.: F16B 5/12, F16B 5/06, B60N 2/75, B60R 13/02

(54) **FIXING SYSTEM BETWEEN PARTS AND VEHICLE DOOR TRIM INCLUDING THE SAME**
BEFESTIGUNGSSYSTEM ZWISCHEN TEILEN UND FAHRZEUGTÜRVERKLEIDUNG MIT DIESEM
SYSTÈME DE FIXATION ENTRE DES PIÈCES ET GARNITURE DE PORTIÈRE DE VÉHICULE LE COMPRENANT

(30) Priority: 17.12.2020 ES 202031261
(43) Date of publication of application: 22.06.2022
(73) Proprietor: Seat, S.A., 08760 Martorell (ES)
(72) Inventor: MORA SACRISTÁN, Jordi, MARTORELL (ES); PORTERO LACARTA, Alejandro, MARTORELL (ES); LÓPEZ NICOLAU, Cristina, MARTORELL (ES); MARTOS SALAMERO, Alfonso, MARTORELL (ES)
(74) Representative: Pons IP

(56) References cited:
- DE-A1- 102018 214 629
- DE-U1- 202016 005 305
- GB-A- 2 334 298

## Description

The present invention relates to a fixing system between parts that is preferably used in the assembly of different parts of vehicle trim panels, wherein the fixing between parts must have reliability characteristics in the attachment achieved and safety against possible forces exerted on these parts in possible collisions or impacts.

The invention also relates to the vehicle door trim including the fixing system, as well as to the vehicle comprising the above trim.

### Background of the invention

The parts attached to the vehicle structure, such as the trim parts thereof, are usually fixed to said structure, further having a fixing element between adjacent parts by way of a centring device, in order to ensure a correct relative positioning between said parts and the correct assembly of the whole.

This fixing system used in the process for assembling vehicle parts has been found not to be sufficient as part retention in maintaining position when a collision occurs.

This is the case, for example, of the parts of the inner panel of the door, such as the armrest part. This armrest can be made up of two or more trim parts, which are attached to the structure of the vehicle door that they cover and, to guarantee the relative positioning between them, a centring device is conventionally used that protrudes from one of the parts and is inserted into a hole of the other. In a lateral collision, these parts can detach from their fixing points, being thrown towards the interior of the cabin and being able to collide with the passengers.

Various fixing systems using clipping between parts are known in the state of the art as can be seen for example in application FR 2 131 041 A5, DE 10 2018 214 629 A1 or GB 2 334 298 A, wherein a double clipping system in a certain direction is used, which enables a fixation between two parts to be carried out that strongly retains the attachment between said parts in the insertion axis of the clip.

A fixing system according to the preamble of claim 1 is for example known from DE 20 2016 005 305 U1.

Although this configuration enables the resistance to disengagement between the parts to be improved, it is the case that in lateral collisions a disengagement or a breakage of the retention system can still be caused, as a consequence of the high energies resulting from the impact, causing a consequent projection of the parts towards the interior of the vehicle cabin.

It is therefore necessary to offer an alternative to the state of the art that covers the problems found therein, by configuring a fixing system that effectively attaches at least two parts and that does not detach from the fixing position thereof in the face of external forces such as those encountered in a collision.

### Description of the invention

The objective of the present invention is to provide a fixing system between vehicle trim parts, as well as the vehicle door trim including the fixing system, and the vehicle with said trim, which solve the aforementioned drawbacks, presenting other advantages that will be described below.

According to this objective, according to a first aspect, the present invention defines a fixing system according to claim 1, between a first part and at least a second part. The second part comprises an opening, while the first part comprises a clipping element configured to be inserted into the opening of the second part, along a clipping axis, such that it prevents the parts from separating at least in the direction of the clipping axis.

The invention is advantageously based on the fact that the opening is formed by a through geometry in the second part, configured to retain the clipped element. This retention of the clipping element is achieved by means of a geometry of the opening with a width in a first direction that determines the distance between the pressure walls by clipping, wherein this width remains substantially constant along the longitudinal extension of this opening in a second direction. This second direction is longer than the dimension of the clipping element in said direction. As indicated, the clipping element is configured to exert a clipping pressure on the second part around the opening and/or against the walls that determine the width of this opening in this first direction.

Also characteristically, the invention is based on the fact that the opening is configured and arranged to enable the clipping element to move in the second direction under the action of an external force, maintaining the retention of the at least two parts on the clipping axis in any displacement position in the second direction, by the action of the clipping pressure of the clipping element in the first direction.

In this way, a fixing system is obtained between at least two parts using a clipping system, which enables the relative movement between the at least two parts in the event that external forces, such as impact forces that create a deformation of the parts that are part of the attachment system, act on these parts. This movement of the clipping element is advantageously configured along the opening in the second direction thereof, having a free path for the displacement of the clipping element, while the width in the first direction remains substantially constant, coinciding with the retention width of this clipping element.

The above enables, in the event of deformations of said parts or neighbouring parts as a result of a high external force, said deformations to be absorbed by means of a controlled relative displacement between the first part and the second part, which will serve to maintain the attachment between parts without the clipping element coming out of the opening due to said deformation. Consequently, the first part or the second part will be prevented from detaching, by maintaining the attachment between the two by means of the fixing system explained herein.

It is clarified that the denomination used for the first and second directions of the opening of the second part show a width and length of this through opening, being able to define various geometries in the second direction thereof, not being limited to an extension of the opening in a rectilinear direction, the opening being able to extend into a curved section, for example, as long as a substantially constant width in the first direction is maintained.

Optionally, the fixing system is configured such that the longitudinal extension of the opening in the second direction is at least twice the dimension of the clipping element in said direction.

This makes it possible to have a maximum displacement path of the clipping element, and therefore of the first part, in the second direction of the opening of the second part, sufficient to absorb the deformation of both parts after receiving an impact. Other dimensions are possible, the dimensioning thereof being subject to the expectation of the impacts or forces that the set of combined forces must withstand.

Optionally, the fixing system comprises a single clipping element for attachment between the two parts with a single fixing opening associated therewith.

Furthermore, alternatively, the fixing system comprises two or more clipping elements for attachment between the two parts, located in one or both parts, with a fixing opening associated with each clipping element in the corresponding part for attachment between parts.

These adapt to the different design needs, having one or more fixing points by clipping element, which have associated openings configured for displacing the clipping element in the event that external forces are exerted on the fixed assembly and create a deformation of the attached parts. These clipping elements can be arranged in the same part or distributed in both, having the corresponding associated opening in the other part in a complementary manner. The number of clipping elements for attachment between the two parts may depend on the dimensions of said parts or on the magnitude of the external force that can be applied to said parts.

Optionally, the clipping element has a passage width through the opening, in the first direction, which is substantially smaller than the dimension of the opening in this direction, and a retention width in this opening, in the first direction, that is substantially larger than the dimension of the opening, preventing the extraction movement of the clipping element in the direction of the clipping axis itself.

This configuration enables the retention in the direction of extraction of the axis of the clipping element, by pressing this clipping element in the first direction of the opening geometry, the clipping element having a geometry that, once the opening is penetrated, acts as a stop for the extraction thereof in said clipping axis.

In this regard, it must be taken into account that the terms referring to the passage width of the clipping element should be understood as the dimension of the clipping element in its width when its arms or flexible tabs contract in order to be able to penetrate the width of the opening in the first direction.

In the same way, the retention width should be understood as the width that the arms or tabs of the clipping element reach once the opening has been penetrated in order to be able to retain the first part next to the second part and that it is not extracted in the direction of the clipping axis.

Optionally, the clipping element comprises two clips separated from each other and attached by the base of said clips, said clips being configured to adopt a flexible position in the first direction and thus exert the clipping pressure in this first direction, whatever the position thereof along the entire extension length of the opening in the second direction, wherein each clip comprises a retaining step configured to be coupled with the walls that define the opening limiting the displacement of the part that contains the clipping element at least in the direction of the clipping axis.

This double clip configuration enables the pressure to be performed by bending the two clips with respect to the first part that incorporates them, providing a greater retention force once the two parts have entered the opening and have been fixed.

Alternatively, the clipping element comprises a single clip configured to exert the clipping pressure in the first direction, wherein the single clip comprises a first step and a second step, arranged on both sides of the clip following the clipping axis and one step opposed with respect to the other with respect to the first direction, and said clip being configured to be coupled with the walls that define the opening to retain the clipping element with respect to the opening at least in the clipping axis.

With this configuration it is possible to perform a fixation with a simple element with two retention tabs for retaining the extraction of the clipping element, with fewer elements and with a simplicity that allows lower construction costs than more resistant but more complex and expensive double configurations.

The first part comprises an overlapping end adjacent to an overlapping end of the second part, the first part being arranged on top of the second part in the overlapping area of both ends, wherein the connecting edges between the overlapping ends have rounded facing surfaces.

This configuration prevents the connecting surfaces between the two parts to be attached from opposing the relative movement between them. If there were connecting surfaces between parts, for example a butt joint alignment between the opposite edges of the two parts, the rotation and relative displacement between parts would be prevented or made difficult, while with these rounded surfaces, this rotation is favoured under conditions of external forces, as one overlap end can be located on top of the other. Consequently, with the appearance of an external force, the overlapping end of the first part will be positioned above the overlapping end of the second part, facilitating a relative displacement between the first part and the second part, and, in this way, the correct compensation of the displacements caused by the external force without breaking the clipping elements.

Within this, the clipping element is arranged adjacent to the overlapping end of the first part, and wherein the opening is arranged adjacent to the overlapping end of the second part.

Optionally, the second part comprises a support surface that extends in the plane defined by the opening to sustain the first part and make contact with at least one area of said first part, the first part being fixed to the second part by means of the fixing system, wherein said support surface comprises the opening.

This arrangement causes the first part to displace along the second part, with contact on said support surface, and enabling the plane of displacement of one part with respect to the other to be limited.

In this way, a fixing system between vehicle parts has been achieved wherein, under deformation and pressure conditions due to impact, a certain displacement between both parts is enabled, especially in said attachment area, which is where, faced with a lateral collision situation, they tend to separate, each component rotating through the opposite end and in opposite directions.

The advantageous arrangement and configuration of the opening in one of the parts, into which the clipping element is inserted, enables the attachment to be guaranteed, while allowing a certain relative displacement between the two components, as well as a subsequent recovery from the starting position.

According to the objectives of the invention, according to a second aspect, the present invention is based on a vehicle door trim according to claim 9, which covers a structure of said door.

This door trim is based on the fact that it comprises a fixing system according to the invention.

In this way we achieve a door trim with the advantages indicated above due to the fixing system it includes.

The first part and the second part define an armrest for a user of the vehicle, being attached together by means of the fixing system, wherein both the first part and the second part comprise attachment means for attaching to the door structure.

These armrests, as has been seen in the state of the art, can solve their drawbacks thanks to this configuration for attaching the parts that enables the movement of the attachment area, with the displacement of one part over another, as has been described in the first aspect of the objectives of the invention.

With regard to this configuration as armrests, the opening is arranged in a plane substantially parallel to the rolling plane of the vehicle, wherein the fixing system is configured to enable a relative rotation of the first part with respect to the second part on the clipping axis, under the action of an external force that is substantially perpendicular to the clipping axis. This relative movement between the first part and the second part consists of a rotational movement combined with a displacement in the second direction.

The configuration of the trim is preferably made with the opening of the second part that extends in the second direction substantially parallel to the direction of travel of the vehicle, as well as substantially perpendicular to the direction of lateral impact, in said rolling plane of the vehicle.

In this way, by following these two previous arrangements, the optimum arrangement for shock absorption can be obtained in a supposedly perpendicular direction to the motion. It should be understood that the orientations of the opening plane can be varied slightly without substantially varying the above principle.

According to the objectives of the invention, according to a third aspect, the present invention is also based on a vehicle according to claim 11, which comprises one or more door trims, wherein at least one of the door trims that it incorporates has the features of the door trims described in the second aspect of the objects of the invention.

With this, the invention makes it possible to have a vehicle having the advantages indicated for the trim indicated above.

### Brief description of the figures

In order to better understand what has been set forth, several drawings are attached wherein a practical embodiment is schematically depicted merely by way of non-limiting example.
Figure 1 is a front elevation view of a vehicle door trim.
Figure 2 is a partial perspective view of a first part to be attached with a double clip to form at least a part of the trim.
Figure 3 is a partial perspective view of a second part to be attached to form at least a portion of the trim.
Figure 4 is a partial bottom perspective view of the attached first and second parts.
Figure 5 is a partial perspective view of the area of overlap between parts with the first part with a certain transparency.
Figure 6 is a partial perspective view of a first part with a single clip.

### Description of a preferred embodiment

The embodiment the invention is described below, in a non-limiting manner, for a better understanding of the features indicated.

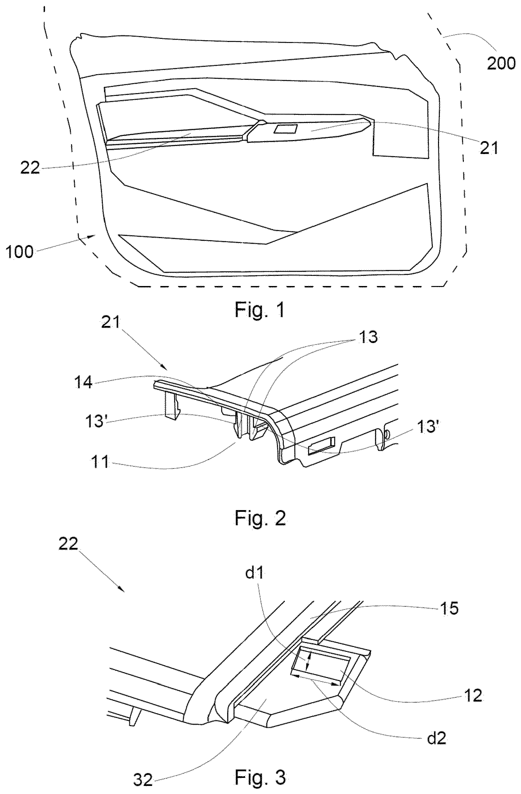

According to the preferred embodiment of the invention and as can be seen in Figure 1, the invention is configured as a fixing system (10) for trim panel parts, which is integrated into a door trim (100) that it is assembled on a vehicle (200), not fully represented in the figures.

In the present embodiment, the parts that form the armrest (21,22) are attached by means of the fixing system (10). As can be seen in Figure 1, the parts that form the armrest (21,22) are a first part (21) and a second part (22). Said first and second parts (21, 22) generate a substantially continuous support surface for an occupant's arm, said support surface being substantially parallel to the plane of advancement of the vehicle (200).

The doors (100) of a vehicle (200) are specifically configured to deform in the event of lateral impact, that is, in a direction perpendicular to the plane defined by the door (100) itself. The present embodiment is configured to, in the face of said deformations of the structural and trim components that make up said door (100), enable a relative displacement between the first part (21) and the second part (22) that prevent the breakage of said parts (21, 22) or of the retaining elements of said parts (21,22), and prevent said parts (21, 22) from being thrown into the interior of the vehicle cabin (200).

As can be seen in greater detail in Figures 2 to 6, the first part (21) comprises a clipping element (11) that is inserted and fixed in the opening (12) of the second part (22). This opening (12) is arranged in a plane substantially parallel to the rolling plane of the vehicle.

Optionally, there are two or more clipping elements in one or both parts, each associated with complementary openings in the other part, both parts being able to have clipping elements and openings associated with their complementary elements in the other part. Similarly, alternatively, there may be a slightly different plane of the opening with certain inclinations with respect to the rolling plane.

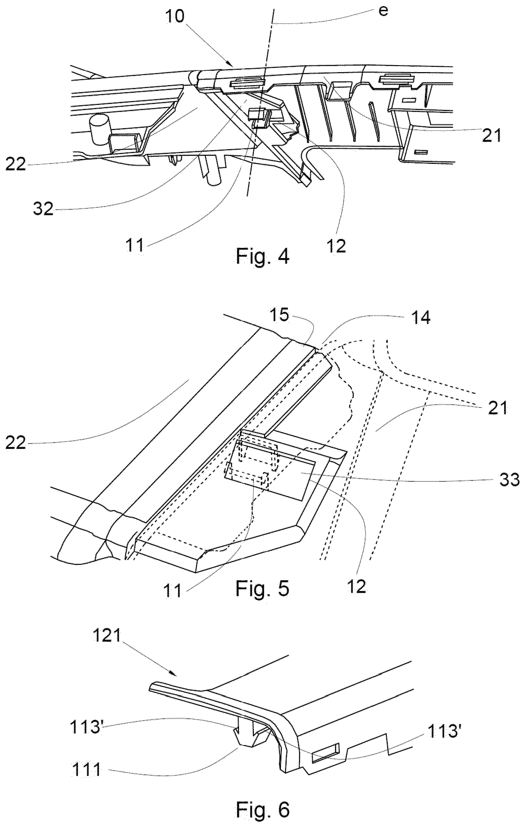

In the present embodiment, the clipping element (11) of the first part (21) is formed, as can be seen in Figures 2 and 4, by two clips (13), one on each side of the clipping axis (e) arranged to encompass the width of the opening (12) of the second part, in a first direction (d1) that defines the width of the opening (12) and that is the width of the fixing of the two clips (13).

Each of the two clips (13) has a certain flexibility at the point of solid attachment thereof to the first part (21) to reduce the passage width of the clipping element (11), the clips (13) recovering their position and by means of the retention steps (13') fixing the position at least on the clipping axis (e).

Alternatively, as can be seen in Figure 6, the clipping element (111) of the first part (121) can be formed with a single clip (113) that has two steps (113') in the form of flexible tabs to enable the clip (113) to pass through the opening (12) and, once fixed, to retain the clip on the clipping axis (e) and in the extraction direction.

Optionally, the first part (21) and the second part (22) are made of a plastic material, which enables elastic deformations, especially of the clipping element (11) during the assembly operation thereof in the opening (12).

As can be seen in Figures 3 and 5, the opening (12) of the second part (22) is formed due to a through geometry that has a width, which corresponds to the corresponding dimension in the first direction (d1) and which is similar to the width of the geometry of the clipping element (11) to be able to retain the clips (13). Furthermore, the opening (12) extends in the direction (d2), substantially parallel to the direction of travel of the vehicle, for a length greater than the geometry of the clips (13) in this second direction (d2), and which in the present embodiment is twice this dimension of the geometry of the clips (13) in this second direction (d2).

This length of the opening (12) in this second direction (d2) enables the clipping element (11) to displace through the opening without disengaging, since the width of the opening (12) in the first direction (d1) is constant throughout the opening (12). Thus, in an assembly position between both first and second parts (21,22), the clipping element (11) is arranged at a first end of the opening (12), a second end of the opening (12) being empty and said second end of the opening (12) being able to be occupied by the clipping element (11) during the displacement thereof caused by the action of the external force. The extent of the displacement will be a function of the module and direction of said external force. This displacement is carried out when the door trim (100) undergoes a deformation caused by the lateral impact on the vehicle door (200), causing the parts (21,22) to rotate on the clipping axis thereof and absorbing this deformation by means of the displacement of the clipping element (11) through the opening in the second direction (d2) and allowing it to return, at least partially, to its original position when external forces cease.

Each of the parts, as can be seen in Figure 5, has an overlapping end (14,15), the overlapping end (14) of the first part (21) overlapping the overlapping end (15) of the second part (22), the connecting edges (31) being rounded to enable the rotation between parts (21,22) on the clipping axis (e) thereof.

In addition to the rounding of the connecting edges (31), the second part comprises a step-shaped geometry at said overlapping end (15), facilitating the support of the overlapping end (14) of the first part (21). In this way, it is possible to generate a continuous surface to support the user's arm, while facilitating that the first part (21) can be displaced from a position facing the second part (22) to a position superimposed on said second part (22), at least in the area of the overlapping ends (14, 15) of the respective first and second parts (21, 22).

Each of the attachment elements, clipping element (11) and opening (12) associated with each of the first (21) and second (22) parts respectively, are arranged adjacent to the respective overlapping end (14,15).

Furthermore, the overlapping ends (14,15) have contact surfaces between both parts (21,22) so that the second part (22) comprises a support surface (32), comprising the opening (12), which extends in the plane defined by the opening (12) to sustain the first part (21), coming into contact with the contact area (33) of said first part (21).

Although reference has been made to a specific embodiment of the invention, it is evident to a person skilled in the art that the fixing system for fixing parts of vehicle door trims, as well as this vehicle door trim, and the vehicle with said trim that have been described are able to present numerous variations and modifications, as long as they remain within the scope of protection defined by the appended claims.

## Claims

1. A fixing system for fixing between a first part (21) and, at least, a second part (22), wherein the second part (22) comprises an opening (12), and wherein the first part (21) comprises a clipping element (11) configured to be inserted into the opening (12) according to a clipping axis (e) such that it prevents the parts (21,22) from separating at least in the direction of the clipping axis (e);
wherein the opening (12) forms a through geometry in the second part (22) configured to retain the clipped element (11) by means of a width in a first direction (d1) that determines a distance between pressure walls by clipping, wherein this width remains substantially constant along a longitudinal extension of this opening (12) in a second direction (d2), longer than the dimension of the clipping element in said direction (d2), wherein the clipping element (11) is configured to exert a clipping pressure on the second part (22) around the opening (12) and/or against the walls that determine the width of this opening (12) in this first direction (d1),
**wherein** the first part (21) comprises an overlapping end (14) adjacent to an overlapping end (15) of the second part (22), the first part (21) being arranged on top of the second part (22) in the overlapping area of both ends (14,15), and wherein the connecting edges (31) between the overlapping ends (14, 15) have rounded facing surfaces;
wherein the clipping element (11) is arranged adjacent to the overlapping end (14) of the first part (21), and wherein the opening (12) is arranged adjacent to the overlapping end (15) of the second part (22),
**characterized in that**, under the action of an external force perpendicular to the clipping axis (e):
- the opening (12) is configured and arranged to enable the displacement of the clipping element (11) in the second direction (d2), maintaining the retention of the at least two parts (21,22) on the clipping axis (e) in any displacement position in the second direction (d2), by the action of the clipping pressure of the clipping element (11) in the first direction (d1)
- the first part (21) is displaced to a position superimposed on said second part (22), at least in the area of the overlapping ends (14, 15) of the respective first and second parts (21, 22),
such that the fixing system is configured to enable a relative rotation of the first part (21) with respect to the second part (22) on the clipping axis (e) under the action of said external force.

2. The fixing system, according to claim 1, wherein the longitudinal extension of the opening (12) in the second direction (d2), is at least twice the dimension of the clipping element (11) in said direction (d2).

3. The fixing system, according to any of the preceding claims, wherein this fixing system (10) comprises a single clipping element (11) for attachment between the two parts (21,22) with a single fixing opening (12) associated therewith (11).

4. The fixing system, according to any of claims 1 or 2, wherein this fixing system (10) comprises two or more clipping elements (11) for attaching the two parts (21,22), located in one or in both parts, with a fixing opening (12) associated with each clipping element (11) in the corresponding part for the attachment between parts.

5. The fixing system, according to any of the preceding claims, wherein the clipping element (11) has a width of passage through the opening (12), in the first direction (d1), that is substantially smaller than the dimension of the opening (12) in this direction (d1), and a retention width in this opening (12), in the first direction (d1), that is substantially larger than the dimension of the opening (12) preventing the extraction movement of the clipping element (11) in the direction of the clipping axis (e) itself.

6. The fixing system, according to claim 5, wherein the clipping element (11) comprises two clips (13) separated from each other and attached by the base of said clips, said clips (13) being configured to adopt a flexible position in the first direction (d1) and thus exert the clipping pressure in this first direction (d1), whatever the position thereof along the entire extension length of the opening (12) in the second direction (d2), wherein each clip (13) comprises a retaining step (13') configured to be coupled with the walls that define the opening (12) limiting the displacement of the part that contains the clipping element (11) at least in the direction of the clipping axis (e).

7. The fixing system, according to claim 5, wherein the clipping element (11) comprises a single clip (113) configured to exert the clipping pressure in the first direction (d1), wherein the single clip (113) comprises a first step and a second step (113'), arranged on both sides of the clip following the clipping axis (e) and one step opposed with respect to the other with respect to the first direction (d1), and said clip being configured to be coupled with the walls that define the opening (12) to retain the clipping element (11) with respect to the opening (12) at least in the clipping axis (e).

8. The fixing system, according to claim 1, wherein the second part (22) comprises a support surface (32) that extends in the plane defined by the opening (12) to sustain the first part (21) and make contact with at least one area (33) of said first part (21), the first part (21) being fixed to the second part (22) by means of the fixing system, wherein said support surface (32) comprises the opening (12).

9. A vehicle door trim, for covering a structure of a door, **characterised in that** the door trim (100) comprises a fixing system of at least two of the parts thereof as described in claims 1 to 8, wherein the first part (21) and the second part (22) define an armrest for a user of the vehicle, being attached together (21,22) by means of the fixing system (10), wherein both the first part (21) and the second part (22) comprise attachment means for attaching to the door structure; (188), and wherein the opening (12) is arranged in a plane substantially parallel to a rolling plane of the vehicle, wherein the fixing system is configured to enable a relative rotation of the first part (21) with respect to the second part (22) on the clipping axis (e), under the action of an external force that is substantially perpendicular to the clipping axis (e).

10. The vehicle door trim, according to claim 9, wherein the opening (12) of the second part (22) extends in the second direction (d2) substantially parallel to direction of travel of the vehicle, as well as substantially perpendicular to a direction of lateral impact, in said rolling plane of the vehicle.

11. A vehicle, comprising one or more door trims, **characterised in that** at least one of the door trims (100) that it incorporates, has the features of any of claims 9 or 10.

## Patentansprüche

1. Befestigungssystem zum Befestigen zwischen einem ersten Teil (21) und mindestens einem zweiten Teil (22), wobei das zweite Teil (22) eine Öffnung (12) umfasst und wobei das erste Teil (21) ein Klemmelement (11) umfasst, das konfiguriert ist, um in die Öffnung (12) gemäß einer Klemmachse (e) eingeführt zu werden, sodass es verhindert, dass sich die Teile (21, 22) mindestens in der Richtung der Klemmachse (e) trennen;
wobei die Öffnung (12) eine Durchgangsgeometrie in dem zweiten Teil (22) bildet, die konfiguriert ist, um das Klemmelement (11) mittels einer Breite in einer ersten Richtung (d1) zu halten, die einen Abstand zwischen Druckwänden durch Klemmen bestimmt, wobei diese Breite entlang einer Längserstreckung dieser Öffnung (12) in einer zweiten Richtung (d2), die länger als die Abmessung des Klemmelements in der Richtung (d2) ist, im Wesentlichen konstant bleibt, wobei das Klemmelement (11) konfiguriert ist, um einen Klemmdruck auf das zweite Teil (22) um die Öffnung (12) herum und/oder gegen die Wände auszuüben, die die Breite dieser Öffnung (12) in dieser ersten Richtung (d1) bestimmen,
**wobei** das erste Teil (21) ein überlappendes Ende (14) benachbart zu einem überlappenden Ende (15) des zweiten Teils (22) umfasst, wobei das erste Teil (21) auf dem zweiten Teil (22) in dem Überlappungsbereich beider Enden (14, 15) angeordnet ist und wobei die Verbindungskanten (31) zwischen den überlappenden Enden (14, 15) abgerundete einander zugewandte Oberflächen aufweisen;
wobei das Klemmelement (11) benachbart zu dem überlappenden Ende (14) des ersten Teils (21) angeordnet ist und wobei die Öffnung (12) benachbart zu dem überlappenden Ende (15) des zweiten Teils (22) angeordnet ist,
**dadurch gekennzeichnet, dass** unter der Einwirkung einer äußeren Kraft senkrecht zu der Klemmachse (e):
- die Öffnung (12) konfiguriert und angeordnet ist, um die Verschiebung des Klemmelements (11) in der zweiten Richtung (d2) zu ermöglichen, wobei die Zurückhaltung der mindestens zwei Teile (21, 22) auf der Klemmachse (e) in einer beliebigen Verschiebungsposition in der zweiten Richtung (d2) durch die Einwirkung des Klemmdrucks des Klemmelements (11) in der ersten Richtung (d1) aufrechterhalten wird
- das erste Teil (21) in eine Position verschoben wird, die dem zweiten Teil (22) mindestens in dem Bereich der überlappenden Enden (14, 15) des jeweiligen ersten und zweiten Teils (21, 22) überlagert ist,
sodass das Befestigungssystem konfiguriert ist, um eine relative Drehung des ersten Teils (21) bezüglich des zweiten Teils (22) um die Klemmachse (e) unter der Einwirkung der äußeren Kraft zu ermöglichen.

2. Befestigungssystem nach Anspruch 1, wobei die Längserstreckung der Öffnung (12) in der zweiten Richtung (d2) mindestens das Zweifache der Abmessung des Klemmelements (11) in der Richtung (d2) beträgt.

3. Befestigungssystem nach einem der vorstehenden Ansprüche, wobei dieses Befestigungssystem (10) ein einziges Klemmelement (11) zur Anbringung zwischen den zwei Teilen (21, 22) mit einer einzigen Befestigungsöffnung (12) umfasst, die diesen (11) zugeordnet ist.

4. Befestigungssystem nach einem der Ansprüche 1 oder 2, wobei dieses Befestigungssystem (10) zwei oder mehr Klemmelemente (11) zum Anbringen der zwei Teile (21, 22), die in einem oder in beiden Teilen angeordnet sind, mit einer Befestigungsöffnung (12) umfasst, die jedem Klemmelement (11) in dem entsprechenden Teil zur Anbringung zwischen den Teilen zugeordnet ist.

5. Befestigungssystem nach einem der vorstehenden Ansprüche, wobei das Klemmelement (11) eine Durchgangsbreite durch die Öffnung (12) in der ersten Richtung (d1), die im Wesentlichen kleiner ist als die Abmessung der Öffnung (12) in dieser Richtung (d1), und eine Haltebreite in dieser Öffnung (12) in der ersten Richtung (d1) aufweist, die im Wesentlichen größer ist als die Abmessung der Öffnung (12), wodurch die Herausziehbewegung des Klemmelements (11) in der Richtung der Klemmachse (e) selbst verhindert wird.

6. Befestigungssystem nach Anspruch 5, wobei das Klemmelement (11) zwei voneinander getrennte und durch das Unterteil der Klammern angebrachte Klammern (13) umfasst, wobei die Klammern (13) konfiguriert sind, um eine flexible Position in der ersten Richtung (d1) anzunehmen und somit den Klemmdruck in dieser ersten Richtung (d1) unabhängig von deren Position entlang der gesamten Erstreckungslänge der Öffnung (12) in der zweiten Richtung (d2) anzunehmen, wobei jede Klammer (13) eine Haltestufe (13') umfasst, die konfiguriert ist, um mit den Wänden gekoppelt zu werden, die die Öffnung (12) definieren, wodurch die Verschiebung des Teils, das das Klemmelement (11) enthält, mindestens in der Richtung der Klemmachse (e) begrenzt wird.

7. Befestigungssystem nach Anspruch 5, wobei das Klemmelement (11) eine einzige Klammer (113) umfasst, die konfiguriert ist, um den Klemmdruck in der ersten Richtung (d1) auszuüben, wobei die einzige Klammer (113) eine erste Stufe und eine zweite Stufe (113') umfasst, die auf beiden Seiten der Klammer entlang der Klemmachse (e) angeordnet sind und eine Stufe inBezug auf die andere in Bezug auf die erste Richtung (d1) gegenüberliegt, und wobei die Klammer konfiguriert ist, um mit den Wänden gekoppelt zu werden, die die Öffnung (12) definieren, um das Klemmelement (11) in Bezug auf die Öffnung (12) mindestens in der Klemmachse (e) zu halten.

8. Befestigungssystem nach Anspruch 1, wobei das zweite Teil (22) eine Stützoberfläche (32) umfasst, die sich in der durch die Öffnung (12) definierten Ebene erstreckt, um das erste Teil (21) zu stützen und mit mindestens einem Bereich (33) des ersten Teils (21) in Kontakt zu treten, wobei das erste Teil (21) mittels des Befestigungssystems an dem zweiten Teil (22) befestigt ist, wobei die Stützoberfläche (32) die Öffnung (12) umfasst.

9. Fahrzeugtürverkleidung zum Abdecken einer Struktur einer Tür,
**dadurch gekennzeichnet, dass** die Türverkleidung (100) ein Befestigungssystem aus mindestens zwei der Teile davon wie in den Ansprüchen 1 bis 8 beschrieben umfasst, wobei das erste Teil (21) und das zweite Teil (22) eine Armlehne für einen Benutzer des Fahrzeugs definieren, die mittels des Befestigungssystems (10) zusammen (21, 22) angebracht sind, wobei sowohl das erste Teil (21) als auch das zweite Teil (22) Anbringungsmittel zum Anbringen an der Türstruktur umfassen; und wobei die Öffnung (12) in einer Ebene angeordnet ist, die im Wesentlichen parallel zu einer Rollebene des Fahrzeugs ist, wobei das Befestigungssystem konfiguriert ist, um eine relative Drehung des ersten Teils (21) in Bezug auf das zweite Teil (22) auf der Klemmachse (e) unter der Einwirkung einer äußeren Kraft zu ermöglichen, die im Wesentlichen senkrecht zu der Klemmachse (e) ist.

10. Fahrzeugtürverkleidung nach Anspruch 9, wobei sich die Öffnung (12) des zweiten Teils (22) in der zweiten Richtung (d2) im Wesentlichen parallel zu einer Fahrtrichtung des Fahrzeugs sowie im Wesentlichen senkrecht zu einer Richtung eines Seitenaufpralls in der Rollebene des Fahrzeugs erstreckt.

11. Fahrzeug, das eine oder mehrere Türverkleidungen umfasst,
**dadurch gekennzeichnet, dass** mindestens eine der Türverkleidungen (100), die es enthält, die Merkmale eines der Ansprüche 9 oder 10 aufweist.

## Revendications

1. Système de fixation pour la fixation entre une première partie (21) et au moins une seconde partie (22), dans lequel la seconde partie (22) comprend une ouverture (12), et dans lequel la première partie (21) comprend un élément de clippage (11) conçu pour être inséré dans l'ouverture (12) selon un axe de clippage (e) de sorte qu'il empêche les parties (21, 22) de se séparer au moins dans la direction de l'axe de clippage (e) ;
dans lequel l'ouverture (12) forme une géométrie traversante dans la seconde partie (22) conçue pour retenir l'élément de clippage (11) au moyen d'une largeur dans une première direction (d1) qui détermine une distance entre des parois de pression par clippage, dans lequel cette largeur reste sensiblement constante le long d'une extension longitudinale de cette ouverture (12) dans une seconde direction (d2), plus longue que la dimension de l'élément de clippage dans ladite direction (d2), dans lequel l'élément de clippage (11) est conçu pour exercer une pression de clippage sur la seconde partie (22) autour de l'ouverture (12) et/ou contre les parois qui déterminent la largeur de cette ouverture (12) dans cette première direction (d1),
**dans lequel** la première partie (21) comprend une extrémité de chevauchement (14) adjacente à une extrémité de chevauchement (15) de la seconde partie (22), la première partie (21) étant disposée sur une partie supérieure de la seconde partie (22) dans la zone de chevauchement de deux extrémités (14, 15), et dans lequel les bords de liaison (31) entre les extrémités de chevauchement (14, 15) ont des surfaces opposées arrondies ;
dans lequel l'élément de clippage (11) est disposé à côté de l'extrémité de chevauchement (14) de la première partie (21), et dans lequel l'ouverture (12) est disposée à côté de l'extrémité de chevauchement (15) de la seconde partie (22),
**caractérisé en ce que,** sous l'action d'une force externe perpendiculaire à l'axe de clippage (e) :
- l'ouverture (12) est conçue et disposée pour permettre le déplacement de l'élément de clippage (11) dans la seconde direction (d2), en maintenant la retenue des au moins deux parties (21, 22) sur l'axe de clippage (e) dans n'importe quelle position de déplacement dans la seconde direction (d2), par l'action de la pression de clippage de l'élément de clippage (11) dans la première direction (d1)
- la première partie (21) se déplace vers une position superposée à ladite seconde partie (22), au moins dans la zone des extrémités de chevauchement (14, 15) des première et seconde parties (21, 22) respectives,
de sorte que le système de fixation soit conçu pour permettre une rotation relative de la première partie (21) par rapport à la seconde partie (22) sur l'axe de clippage (e) sous l'action de ladite force externe.

2. Système de fixation selon la revendication 1, dans lequel l'extension longitudinale de l'ouverture (12) dans la seconde direction (d2) est au moins le double de la dimension de l'élément de clippage (11) dans ladite direction (d2).

3. Système de fixation selon l'une quelconque des revendications précédentes, dans lequel ce système de fixation (10) comprend un seul élément de clippage (11) pour l'attachement entre les deux parties (21, 22) avec une seule ouverture (12) de fixation associée à celui-ci (11).

4. Système de fixation selon l'une quelconque des revendications 1 ou 2, dans lequel ce système de fixation (10) comprend deux ou plusieurs éléments de clippage (11) destinés à attacher les deux parties (21, 22), situées dans une ou deux parties, avec une ouverture (12) de fixation associée à chaque élément de clippage (11) dans la partie correspondante pour l'attachement entre des parties.

5. Système de fixation selon l'une quelconque des revendications précédentes, dans lequel l'élément de clippage (11) a une largeur de passage à travers l'ouverture (12), dans la première direction (d1), qui est sensiblement inférieure à la dimension de l'ouverture (12) dans cette direction (d1), et une largeur de retenue dans cette ouverture (12), dans la première direction (d1), qui est sensiblement supérieure à la dimension de l'ouverture (12), empêchant le mouvement d'extraction de l'élément de clippage (11) dans la direction de l'axe de clippage (e) lui-même.

6. Système de fixation selon la revendication 5, dans lequel l'élément de clippage (11) comprend deux clips (13) séparés l'un de l'autre et attachés par la base desdits clips, lesdits clips (13) étant conçus pour adopter une position flexible dans la première direction (d1) et exercer ainsi la pression de clippage dans cette première direction (d1), quelle que soit la position de ceux-ci sur toute la longueur d'extension de l'ouverture (12) dans la seconde direction (d2), dans lequel chaque clip (13) comprend une marche de retenue (13') conçue pour être accouplée aux parois qui définissent l'ouverture (12), limitant le déplacement de la partie qui contient l'élément de clippage (11) au moins dans la direction de l'axe de clippage (e).

7. Système de fixation selon la revendication 5, dans lequel l'élément de clippage (11) comprend un seul clip (113) conçu pour exercer la pression de clippage dans la première direction (d1), dans lequel le seul clip (113) comprend une première marche et une seconde marche (113') disposées de deux côtés du clip suivant l'axe de clippage (e), et une marche étant opposée à l'autre par rapport à la première direction (d1), et ledit clip étant conçu pour être accouplé aux parois qui définissent l'ouverture (12) afin de retenir l'élément de clippage (11) par rapport à l'ouverture (12) au moins dans l'axe de clippage (e).

8. Système de fixation selon la revendication 1, dans lequel la seconde partie (22) comprend une surface de support (32) qui s'étend dans le plan défini par l'ouverture (12) afin de soutenir la première partie (21) et d'entrer en contact avec au moins une zone (33) de ladite première partie (21), la première partie (21) étant fixée à la seconde partie (22) au moyen du système de fixation, dans lequel ladite surface de support (32) comprend l'ouverture (12).

9. Garniture de portière de véhicule destinée à recouvrir une structure d'une portière, **caractérisée en ce que** la garniture de portière (100) comprend un système de fixation d'au moins deux des parties de celle-ci tel que décrit dans les revendications 1 à 8, dans laquelle la première partie (21) et la seconde partie (22) définissent un accoudoir pour un utilisateur du véhicule, qui sont fixées ensemble (21, 22) au moyen du système de fixation (10), dans laquelle la première partie (21) et la seconde partie (22) comprennent toutes deux des moyens d'attache destinés à être attachés à la structure de portière ; et dans laquelle l'ouverture (12) est disposée dans un plan sensiblement parallèle à un plan de roulement du véhicule, dans laquelle le système de fixation est conçu pour permettre une rotation relative de la première partie (21) par rapport à la seconde partie (22) sur l'axe de clippage (e), sous l'action d'une force externe qui est sensiblement perpendiculaire à l'axe de clippage (e).

10. Garniture de portière de véhicule selon la revendication 9, dans laquelle l'ouverture (12) de la seconde partie (22) s'étend dans la seconde direction (d2) sensiblement parallèle à une direction de déplacement du véhicule, ainsi que sensiblement perpendiculaire à une direction d'impact latéral, dans ledit plan de roulement du véhicule.

11. Véhicule comprenant une ou plusieurs garnitures de portière, **caractérisé en ce qu'**au moins l'une des garnitures de portière (100) qu'il intègre a les caractéristiques selon l'une quelconque des revendications 9 ou 10.
